# EUROPEAN PATENT APPLICATION

(11) **EP 4 836 077 A1**
(43) Date of publication of application: **04.11.2026**
(21) Application number: 24912434.8
(22) Date of filing: 13.12.2024
(51) Int. Cl.: H01M 10/54, H01M 4/58

(54) **METHOD OF PRODUCING REGENERATED POSITIVE ELECTRODE ACTIVE MATERIAL**

(30) Priority: 26.12.2023 JP 2023219925
(71) Applicant: FUJIFILM Corporation, Tokyo 106-8620 (JP)
(72) Inventor: KAMADA, Toshihiro, Minamiashigara-shi, Kanagawa 250-0193 (JP); YAWATA, Toshihiko, Minamiashigara-shi, Kanagawa 250-0193 (JP); OZAWA, Shin, Minamiashigara-shi, Kanagawa 250-0193 (JP); TOKAIRIN, Masatoshi, Minamiashigara-shi, Kanagawa 250-0193 (JP)
(74) Representative: HGF
(86) International application number: PCT/JP2024/044153
(87) International publication number: WO 2025/142545

(57) **Abstract**

Provided is a method for producing a regenerated positive electrode active material, the method including replenishing lithium in a lithium-deficient positive electrode active material (a) by mixing the lithium-deficient positive electrode active material (a), a lithium compound (b), and a reducing agent (c) to obtain a regenerated positive electrode active material, in which an oxidation-reduction potential of the reducing agent (c) is 1.80 to 3.00 eV vs Li⁺/Li.

## Description

### BACKGROUND OF THE INVENTION

### 1. Field of the Invention

The present invention relates to a method for producing a regenerated positive electrode active material.

### 2. Description of the Related Art

A lithium ion secondary battery (LIB) has a high energy density, excellent storage performance, low-temperature operability, and the like, and is widely used in portable electronic devices such as a mobile phone and a laptop. In addition, the battery has been enlarged and been used in transportation equipment such as automobiles, and the use of the battery as a storage device for nighttime power, power generated by natural energy, and the like has also been promoted.

A positive electrode of a lithium ion secondary battery generally has a positive electrode active material layer, and the positive electrode active material layer contains positive electrode active material particles capable of intercalating or deintercalating lithium ions during charging and discharging. The positive electrode active material layer is usually formed by preparing a slurry (composition) containing a constituent component of the positive electrode active material layer such as a positive electrode active material, and applying and drying the slurry.

The positive electrode active material is an important material that determines a battery capacity, but it is known that the positive electrode active material deteriorates due to long-term operation of the lithium ion secondary battery. It is considered that the reason for this is that lithium ions that are deintercalated from the positive electrode active material during charging and move to a negative electrode side do not return completely to the positive electrode active material from the negative electrode during discharging, and the lithium ions are in a state of being deficient in the positive electrode active material (the positive electrode active material is a lithium-deficient positive electrode active material) in a case where charging and discharging are repeated.

With the rapid spread of the lithium ion secondary battery, there is an increasing interest in a recycling technique of a constituent material of the lithium ion secondary battery. Among these, a relithiation technique for regenerating a lithium-deficient positive electrode active material in a used lithium ion secondary battery by directly replenishing lithium therein has been attracting attention.

For example, US9287552B discloses a method of subjecting an electrode material in a lithium-deficient state to a hydrothermal reaction in a solution containing lithium ions, and as a specific example thereof, it is disclosed that an electrode material containing LiCoO₂ is heated at 100°C to 300°C for 12 to 48 hours in about 4 M of lithium hydroxide.

In addition, JP2023-502220A discloses a method of electrochemical alkalization of an electrochemical active material, the method including a step of adding the electrochemical active material to a solution containing a reducing agent and an alkali metal salt in a solvent to produce an alkalized electrochemical active material. In this method, it is described that a redox pair is used as a reducing agent.

### SUMMARY OF THE INVENTION

The positive electrode active material is deteriorated not only by the lithium ions being deficient due to long-term charging and discharging, but also by the original crystal structure of the positive electrode active material being collapsed (the same as a decrease in regularity of the crystal structure or a decrease in crystallinity). As a result of studies conducted by the present inventors, it has been found that the regenerated positive electrode active material obtained by relithiating a lithium-deficient positive electrode active material may have low crystallinity. In a case where the crystallinity of the regenerated positive electrode active material is low, there is a problem in that a sufficient discharge capacity cannot be obtained in a case of being incorporated into a lithium ion secondary battery.

As a method of increasing the crystallinity of the positive electrode active material, it is known to perform calcination. However, in a case where a positive electrode active material having excellent crystallinity can be obtained under milder reaction conditions at a lower temperature, the regeneration of the positive electrode active material can be performed more efficiently.

An object of the present invention is to provide a method for producing a regenerated positive electrode active material, which includes replenishing lithium in a lithium-deficient positive electrode active material generated by the use of a lithium ion secondary battery, in which a regenerated positive electrode active material exhibiting excellent crystallinity can be obtained under relatively mild reaction conditions.

As a result of repeated studies on a method of replenishing lithium in a lithium-deficient positive electrode active material to regenerate the lithium-deficient positive electrode active material, the present inventors have found that a regenerated positive electrode active material exhibiting excellent crystallinity can be obtained under relatively mild reaction conditions by using a specific reducing agent. The invention has been further studied based on these findings, and has been completed.

That is, the above-described object has been achieved by the following means.
[1] A method for producing a regenerated positive electrode active material, the method comprising replenishing lithium in a lithium-deficient positive electrode active material (a) by mixing the lithium-deficient positive electrode active material (a), a lithium compound (b), and a reducing agent (c) to obtain a regenerated positive electrode active material,
   in which an oxidation-reduction potential of the reducing agent (c) is 1.80 to 3.00 eV vs Li⁺/Li.
[2] The method for producing a regenerated positive electrode active material according to [1], in which the oxidation-reduction potential of the reducing agent (c) is 2.00 to 2.70 eV vs Li⁺/Li.
[3] The method for producing a regenerated positive electrode active material according to [1] or [2], in which the reducing agent (c) is an ascorbic acid compound.
[4] The method for producing a regenerated positive electrode active material according to any one of [1] to [3], in which a mixture of the lithium-deficient positive electrode active material (a), the lithium compound (b), and the reducing agent (c) is held at 25°C to 160°C.
[5] The method for producing a regenerated positive electrode active material according to any one of [1] to [4], in which a mixture of the lithium-deficient positive electrode active material (a), the lithium compound (b), and the reducing agent (c) is held at 25°C to 120°C.
[6] The method for producing a regenerated positive electrode active material according to any one of [1] to [5], in which the lithium compound (b) is lithium hydroxide.
[7] The method for producing a regenerated positive electrode active material according to any one of [1] to [6], in which the lithium-deficient positive electrode active material (a) has an olivine-type structure.
[8] The method for producing a regenerated positive electrode active material according to any one of [1] to [7], in which the lithium-deficient positive electrode active material (a) is a positive electrode active material represented by Li₁₋ₓM¹PO₄, x represents a lithium deficiency amount and satisfies 0 < x ≤ 1, and M¹ represents at least one element selected from Fe, Mn, and Co.
[9] The method for producing a regenerated positive electrode active material according to any one of [1] to [8], in which the regenerated positive electrode active material contains a lithium-containing transition metal phosphate compound, and a half-width of a peak at 2θ = 17.1 degrees in X-ray diffraction of the regenerated positive electrode active material is 0.001 degrees or more and 0.099 degrees or less.
[10] The method for producing a regenerated positive electrode active material according to [9], in which the half-width of the peak of the regenerated positive electrode active material is 0.005 degrees or more and 0.050 degrees or less.

According to the method for producing a regenerated positive electrode active material of the present invention, it is possible to obtain a regenerated positive electrode active material from a lithium-deficient positive electrode active material under relatively mild reaction conditions while imparting excellent crystallinity thereto.

### DESCRIPTION OF THE PREFERRED EMBODIMENTS

In the present invention, a numerical range represented by "to" refers to a range including numerical values described before and after "to" as a lower limit value and an upper limit value.

In the present invention, in a case where a component composition is described, unless otherwise specified, each component may be contained in an amount of one kind or two or more kinds.

In the present invention, the "secondary battery" means a device in which ions move between a positive electrode and a negative electrode through an electrolyte by charging and discharging, and energy is stored and released in the positive electrode and the negative electrode. That is, in the present invention, "secondary battery" has a meaning including both the battery and capacitor (for example, a lithium ion capacitor). In a case where the ions are lithium ions, the secondary battery is a lithium ion secondary battery.

The concentration of water in the "non-aqueous electrolytic solution" in the present invention is 200 ppm (based on mass) or less, preferably 100 ppm or less, and more preferably 20 ppm or less. It should be noted that the content of water in the non-aqueous electrolytic solution is usually 1 ppm or more, because it is practically difficult to make an absolutely anhydrous non-aqueous electrolytic solution.

### [Method for producing regenerated positive electrode active material]

A method for producing a regenerated positive electrode active material according to the embodiment of the present invention (also referred to as a production method according to the embodiment of the present invention) includes replenishing lithium in a lithium-deficient positive electrode active material (a) by mixing the lithium-deficient positive electrode active material (a), a lithium compound (b), and a reducing agent (c) to obtain a regenerated positive electrode active material. In the production method according to the embodiment of the present invention, a reducing agent having an oxidation-reduction potential of 1.80 to 3.00 eV vs Li⁺/Li is used as the reducing agent (c).

According to the method for producing a regenerated positive electrode active material according to the embodiment of the present invention, it is possible to produce a regenerated positive electrode active material exhibiting excellent crystallinity under relatively mild reaction conditions. The regenerated positive electrode active material obtained by the production method according to the embodiment of the present invention can be used as a positive electrode active material of a secondary battery.

A preferred aspect of the production method according to the embodiment of the present invention includes replenishing lithium by mixing the lithium-deficient positive electrode active material (a) with a treatment liquid containing a lithium compound (b) and a reducing agent (c) in the solvent. It is more preferable that the mixing is carried out by heating. In a case where the solvent contains water, the relithiation reaction of the lithium-deficient positive electrode active material (a) in this aspect is a so-called hydrothermal reaction. The regenerated positive electrode active material relithiated in this manner can be recovered from the reaction solution by a typical solid-liquid separation method such as filtration.

The production method according to the embodiment of the present invention may further include recovering the lithium-deficient positive electrode active material (a), washing and calcining the obtained regenerated positive electrode active material.

The production method according to the embodiment of the present invention will be described in more detail with the above-described preferred aspects as the center.

### <Recovery of lithium-deficient positive electrode active material (a)>

First, the lithium-deficient positive electrode active material (a) used as a raw material will be described.

The lithium-deficient positive electrode active material (a) means a positive electrode active material in a state in which at least a part of lithium in a chemical equivalent derived from an element composition of a compound is deficient and the amount of lithium is smaller than the chemical equivalent. The amount (molar amount) of lithium contained in the lithium-deficient positive electrode active material (a) is preferably 0.1 to 0.9 times, more preferably 0.2 to 0.8 times, and still more preferably 0.3 to 0.7 times the amount (molar amount) of lithium in the positive electrode active material in which lithium is not deficient.

The lithium-deficient positive electrode active material (a) is derived from a metal oxide which is usually used as a positive electrode active material of a lithium ion secondary battery. In the lithium ion secondary battery, a lithium-containing transition metal oxide is often used as the positive electrode active material (for example, refer to JP2023-106633A). Among these, examples thereof include (MA) a lithium-containing transition metal oxide having a layered rock-salt structure, (MB) a lithium-containing transition metal oxide having a spinel-type structure, (MC) a lithium-containing transition metal phosphate compound, (MD) a lithium-containing transition metal halogenated phosphate compound, and (ME) a lithium-containing transition metal silicate compound. In the present invention, (MC) the lithium-containing transition metal phosphate compound is preferable, and among these, a lithium-containing transition metal phosphate compound having an olivine-type structure is preferable. Specific examples of the lithium-containing transition metal phosphate compound having an olivine-type structure include iron phosphate salts such as LiFePO₄ and Li₃Fe₂(PO₄)₃.

The lithium-deficient positive electrode active material (a) is preferably a positive electrode active material containing a lithium-containing transition metal phosphate compound, and is more preferably a positive electrode active material represented by Li₁₋ₓM¹PO₄ (x represents a lithium deficiency amount and satisfies 0 < x ≤ 1, and M¹ represents at least one element selected from Fe, Mn, and Co). M¹ is preferably an element selected from Fe and Mn, and more preferably Fe.

The positive electrode active material (positive electrode active material containing lithium in a chemical equivalent) in which lithium is not deficient and corresponds to the lithium-deficient positive electrode active material (a) represented by Li₁₋ₓM¹PO₄ is a positive electrode active material represented by LiM¹PO₄. In a case where Li is completely deficient due to charging and discharging, the positive electrode active material is represented by M¹PO₄.

The lithium-deficient positive electrode active material (a) can be obtained by recovering the positive electrode active material from the used lithium ion secondary battery.

A method for recovering the lithium-deficient positive electrode active material (a) is not particularly limited as long as the lithium-deficient positive electrode active material can be recovered from the used lithium ion secondary battery.

In the method for recovering the lithium-deficient positive electrode active material (a), for example, a positive electrode taken out from the lithium ion secondary battery is immersed in a solvent, the collector and the positive electrode active material are separated by an external stimulus such as ultrasonic treatment, and the collector is taken out, whereby the lithium-deficient positive electrode active material (a) can be obtained as solid particles in the remaining suspension. For example, as shown in Examples described later, the lithium-deficient positive electrode active material (a) can be obtained by washing and drying the positive electrode taken out from the lithium ion secondary battery, further immersing the positive electrode in a solvent, subjecting the positive electrode to ultrasonic treatment, recovering a precipitate by centrifugation from a suspension obtained by taking out the collector, and drying the precipitate.

The solvent used for the immersion and the ultrasonic treatment may be appropriately selected, and examples thereof include N-methylpyrrolidone (NMP), N-ethylpyrrolidone, and N,N-dimethylformamide.

In a case where the positive electrode from which the lithium-deficient positive electrode active material (a) is taken out contains a binder, it is preferable that the immersion and the ultrasonic treatment are carried out in a solvent capable of dissolving the binder. Examples of such a solvent include N-methylpyrrolidone (NMP), N-ethylpyrrolidone, and N,N-dimethylformamide.

The immersion is preferably carried out for a time in which a component constituting the positive electrode active material layer, particularly a binder in a case of containing a binder, is sufficiently compatible with the solvent. The immersion time is preferably 10 minutes or more, and it is also preferably 20 minutes or more. Since the recovery effect does not change even in a case where the immersion is continued for a long time once the immersion has been carried out for a certain period of time, the immersion time is preferably 20 minutes to 1 hour. The immersion may be carried out at room temperature or under heating.

The conditions of the ultrasonic treatment are not particularly limited as long as the positive electrode collector can be separated from the positive electrode and the solid particles (solid particles mainly containing the positive electrode active material) constituting the positive electrode active material layer can be obtained in a suspended state in the solvent. For example, the ultrasonic treatment can be carried out for 10 to 60 minutes.

The centrifugation may be any centrifugation so long as the lithium-deficient positive electrode active material (a) can be recovered as a precipitate from the suspension. The centrifugation conditions may be, for example, 2,000 to 4,000 rpm for 5 to 30 minutes.

The drying is an operation of removing the solvent from the recovered lithium-deficient positive electrode active material (a). The drying conditions can be, for example, 80°C to 200°C for 5 to 24 hours. In addition, the drying may be carried out under reduced pressure.

By the immersion, the ultrasonic treatment, and the centrifugation, most of the binder and the conductive auxiliary agent can be removed. However, usually, a small amount of the binder and/or the conductive auxiliary agent remains even by the immersion, the ultrasonic treatment, and the centrifugation. Therefore, the lithium-deficient positive electrode active material (a) subjected to these steps usually contains a small amount of the binder and/or the conductive auxiliary agent.

### <Relithiation>

The oxidation-reduction potential of the reducing agent (c) used for the relithiation is 1.80 to 3.00 eV vs Li⁺/Li. By setting the oxidation-reduction potential of the reducing agent (c) within the above-described range, the crystallinity of the regenerated positive electrode active material can be sufficiently increased to a desired level. For example, in a case where a reducing agent having an excessively high oxidation-reduction potential is used, it is necessary to increase the reaction temperature to a high temperature or to lengthen the reaction time during the relithiation in order to achieve sufficient relithiation. In a case where such high-temperature and/or long-time reaction conditions are employed, it is difficult to obtain a regenerated positive electrode active material having sufficient crystallinity, and side reactions such as formation of iron oxide are likely to proceed. On the other hand, in a case where a reducing agent having an excessively low oxidation-reduction potential is used, the relithiation is less likely to proceed due to side reactions between impurities such as the electrolytic solution components contained in the recovered lithium-deficient positive electrode active material and the reducing agent.

The oxidation-reduction potential of the reducing agent (c) is preferably 2.00 to 2.70 eV vs Li⁺/Li, more preferably 2.20 to 2.50 eV vs Li⁺/Li, and still more preferably 2.40 to 2.50 eV vs Li⁺/Li. By setting the oxidation-reduction potential of the reducing agent (c) within the above-described preferable range, the crystallinity of the regenerated positive electrode active material can be sufficiently increased. Further, the relithiation rate of the regenerated positive electrode active material also tends to be further increased.

As the oxidation-reduction potential of the reducing agent (c), a literature value can be adopted. For example, a value of the oxidation-reduction potential described in the Electrochemical Handbook, 6th Edition (edited by the Electrochemical Society of Japan, Maruzen Co., Ltd.) can be adopted. In a case where the literature value is a relative value with respect to a standard hydrogen electrode (SHE) (vs SHE), the literature value can be converted into a value with respect to the oxidation-reduction potential of lithium (Li⁺/Li) (vs Li⁺/Li) by adding 3.05 eV to the literature value. For a reducing agent having an unknown oxidation-reduction potential, the oxidation-reduction potential can be determined by the following method.

### -Method for measuring oxidation-reduction potential-

As the electrolytic solution a, a 0.25 M Li₂SO₄ aqueous solution is used. An electrolytic solution b containing 1% by mass of the reducing agent (c) is separately prepared from the electrolytic solution a. The electrolytic solution b is put into a cathode chamber of a battery in which glassy carbon (diameter: 3 mm) is installed as a working electrode. A platinum black mesh is put into an anode chamber filled with the electrolytic solution a and partitioned by a sintered glass disk. An Ag/AgCl electrode is used as a reference electrode.

A voltammogram (current-voltage curve) is obtained using an electrochemical measurement system (VMP-300 (trade name), manufactured by Bio-Logic). The measurement is carried out at room temperature and atmospheric pressure at a scanning rate of 120 mV/sec between 2.05 V and 4.25 V vs. Li⁺/Li.

A voltammogram is obtained in the same manner as described above, except that the electrolytic solution a (electrolytic solution not containing the reducing agent (c)) is used instead of the electrolytic solution b.

The two voltammograms obtained above are superposed, and, at the rise of the current value, the first voltage at which a difference between the current value of the electrolytic solution b and the current value of the electrolytic solution a containing no reducing agent (c) becomes 0.2 mA is read, thereby obtaining, from the oxidation-reduction potential based on Ag/AgCl, a value based on the oxidation-reduction potential of lithium (Li⁺/Li) (vs Li⁺/Li).

The reducing agent (c) acts as a reducing agent for the lithium-deficient positive electrode active material (a). The reducing agent (c) is not particularly limited as long as the reducing agent (c) has an oxidation-reduction potential of 1.80 to 3.00 eV vs Li⁺/Li. From the viewpoint of suppressing the generation of inorganic ions that may affect battery performance, the reducing agent (c) is preferably an organic compound. As the reducing agent (c), a carboxylic acid compound such as citric acid, an ascorbic acid compound such as ascorbic acid and a salt thereof, a phosphinic acid compound such as phosphinic acid and a salt thereof, sodium hydrogen sulfite, or the like can be used, and a carboxylic acid compound or an ascorbic acid compound is preferable, and an ascorbic acid compound is more preferable. From the viewpoint of achieving both excellent crystallinity and a high relithiation rate, an ascorbic acid compound is preferable, ascorbic acid or an ascorbic acid metal salt (preferably an alkali metal salt) is more preferable, ascorbic acid or sodium ascorbate is still more preferable, and ascorbic acid is particularly preferable.

The reducing agent (c) is preferably water-soluble.

Preferred specific examples of the reducing agent (c) are as follows together with the oxidation-reduction potential thereof and the name of the reference document. In a case where the name of the reference document is not described, the value is a measured value. In the present invention, the oxidation-reduction potentials shown in the table below are adopted for the reducing agents shown in the table below.

**[Table A]**

| Reducing agent | Oxidation-reduction potential (eV vs Li⁺/Li) | Name of reference document |
|---|---|---|
| Citric acid | 2.71 | - |
| Sodium phosphinate | 2.55 | Electrochemical Handbook, 6th Edition (edited by the Electrochemical Society of Japan, Maruzen Co., Ltd.) |
| Ascorbic acid | 2.50 | Borsook, H., and Keighley, G.(1933). Oxidation-reduction potential of ascorbic acid(vitamin C). Proc. Natl. Acad. Sci. USA. 19, 875-878. |
| Sodium ascorbate | 2.48 | - |
| Sodium hydrogen sulfite | 1.92 | Electrochemical Handbook, 6th Edition (edited by the Electrochemical Society of Japan, Maruzen Co., Ltd.) |
| Phosphoric acid | 2.77 | Electrochemical Handbook, 6th Edition (edited by the Electrochemical Society of Japan, Maruzen Co., Ltd.) |
| Phosphorous acid | 2.55 | Electrochemical Handbook, 6th Edition (edited by the Electrochemical Society of Japan, Maruzen Co., Ltd.) |

The lithium compound (b) acts as a lithium source for replenishing lithium in the lithium-deficient positive electrode active material (a).

Examples of the lithium compound (b) include lithium sulfate, lithium carbonate, lithium bicarbonate, lithium hydroxide, lithium nitrate, lithium acetate, lithium oxalate, lithium phosphate, lithium halide, lithium fluoride, and lithium oxide. Preferred specific examples thereof include lithium hydroxide (LiOH), lithium sulfate (Li₂SO₄), lithium chloride (LiCl), lithium carbonate (Li₂CO₃), lithium hydrogen carbonate (LiHCO₃), lithium iodide (LiI), lithium fluoride (LiF), lithium acetate (LiCH₃COO), and lithium oxide (Li₂O); and LiCl, Li₂SO₄ and/or LiOH are preferable, and LiOH is more preferable.

The lithium compound (b) is preferably a lithium compound soluble in water.

From the viewpoint of increasing the crystallinity of the regenerated positive electrode active material, a molar ratio of the lithium in the lithium compound (b) used for the relithiation to the reducing agent (c) is preferably 0.25 ≤ (b)/(c) ≤ 2.80, more preferably 0.35 ≤ (b)/(c) ≤ 2.50, still more preferably 0.50 ≤ (b)/(c) ≤ 2.50, and even still more preferably 1.00 ≤ (b)/(c) ≤ 2.50. By setting the molar ratio within the above-described range, the relithiation rate of the regenerated positive electrode active material tends to be increased. The molar ratio can be set to 0.35 ≤ (B)/(C) ≤ 2.40 or can be set to 0.50 ≤ (b)/(c) ≤ 2.30.

It is preferable that the lithium compound (b) and the reducing agent (c) are dissolved in a solvent to be in a form of a solution (treatment liquid) and then reacted with the lithium-deficient positive electrode active material (a).

Therefore, as the solvent, a solvent capable of dissolving the lithium compound (b) and the reducing agent (c) is preferable, and an organic solvent, an inorganic solvent, or a combination thereof can be used. The solvent is preferably water (preferably ultrapure water) or a combination of water and a water-soluble organic solvent.

In the mixing of the above-described treatment liquid and the lithium-deficient positive electrode active material (a), a concentration of the lithium-deficient positive electrode active material (a) in the mixture can be set to 0.01 to 1.20 mol/L, 0.03 to 1.00 mol/L, 0.10 to 0.80 mol/L, or 0.10 to 0.50 mol/L.

A concentration of the lithium compound (b) in the above-described mixture can be set to 0.05 to 5.00 mol/L, 0.10 to 4.00 mol/L, 0.10 to 3.00 mol/L, 0.10 to 2.00 mol/L, 0.10 to 1.00 mol/L, or 0.10 to 0.50 mol/L in terms of the amount of lithium.

A concentration of the reducing agent (c) in the above-described mixture can be set to 0.05 to 1.00 mol/L, 0.05 to 0.80 mol/L, 0.05 to 0.60 mol/L, 0.06 to 0.40 mol/L, 0.06 to 0.20 mol/L, or 0.06 to 0.10 mol/L.

A reaction temperature (temperature of the above-described mixture) of the lithium-deficient positive electrode active material (a), the lithium compound (b), and the reducing agent (c) is not particularly limited, and can be set to 20°C to 160°C, 25°C to 160°C, 25°C to 120°C, 25°C to 100°C, 25°C to 80°C, 25°C to 59°C, 25°C to 50°C, 30°C to 50°C, or 30°C to 40°C. From the viewpoint of increasing the crystallinity of the regenerated positive electrode active material, the reaction temperature is preferably set to 100°C or lower.

The reaction time of the lithium-deficient positive electrode active material (a), the lithium compound (b), and the reducing agent (c) depends on the reaction temperature, but is preferably 5 to 20 hours, more preferably 7 to 18 hours, and still more preferably 10 to 15 hours. The reaction time can be set to 1 to 7 hours, or 1 to 5 hours.

The reaction of the lithium-deficient positive electrode active material (a), the lithium compound (b), and the reducing agent (c) is preferably carried out in a pressure-resistant container. This is because the pressure in the container may increase during the reaction.

From the viewpoint of increasing the crystallinity of the obtained regenerated positive electrode active material, an amount of the lithium compound (b) to be blended is preferably 1 molar equivalent or more (that is, 1 mol or more as lithium atoms contained in the lithium compound (b) with respect to 1 mol of the lithium deficiency amount) and more preferably 2 molar equivalents or more with respect to the lithium deficiency amount (mol) of the lithium-deficient positive electrode active material (a). The upper limit is practically 40 molar equivalents, and is preferably 30 molar equivalents or less, more preferably 25 molar equivalents or less, and still more preferably 20 molar equivalents or less. Therefore, the amount of the lithium compound (b) to be blended is preferably 1 to 40 molar equivalents, more preferably 1 to 30 molar equivalents, still more preferably 1 to 25 molar equivalents, and even still more preferably 2 to 20 molar equivalents with respect to the lithium deficiency amount (mol).

The lithium deficiency amount of the lithium-deficient positive electrode active material (a) can be calculated from the lithium deficiency rate (%) of the lithium-deficient positive electrode active material (a). The lithium deficiency rate can be measured by the method described in Examples.

### <Another step>

In the production method according to the embodiment of the present invention, the solid particles may be collected by filtration from the reaction solution after the relithiation treatment, and washed to remove the lithium compound (b) and the reducing agent (c) which are not consumed during the relithiation treatment, the conductive auxiliary agent, by-products formed by the relithiation treatment, and the like.

In the production method according to the embodiment of the present invention, after the relithiation treatment, the crystalline state of the regenerated positive electrode active material may be controlled by calcination, or the calcination may not be performed. By performing the calcination, defects in the crystal of the regenerated positive electrode active material can be reduced. According to the production method according to the embodiment of the present invention, it is possible to obtain a regenerated positive electrode active material having excellent crystallinity even without performing the calcination.

The production method according to the embodiment of the present invention can include any one of the washing or the calcination as a post-treatment of the relithiation treatment, and can also include both the washing and the calcination. It is preferable that the production method according to the embodiment of the present invention includes the washing and does not include the calcination.

The filtration may be performed by a normal filtration treatment as long as solid particles can be recovered from the treatment liquid, and is preferably performed by vacuum filtration.

The washing can be performed by washing the solid particles obtained by the relithiation with a washing solution. By the washing, even in a case where a trace amount of the conductive auxiliary agent remains (in a case of recovering the lithium-deficient positive electrode active material (a)), the conductive auxiliary agent can be removed due to a difference in specific gravity or particle size from the regenerated positive electrode active material. The method for removing the conductive auxiliary agent is not limited, and flotation or centrifugation can be used.

For example, the solid particles can be suspended in the washing solution and centrifuged to recover the solid particles. After the washing, the solid particles can be dried.

As the washing solution, water is preferable, and pure water is preferable.

The conditions for the suspension are not particularly limited. The solid particles and the washing solution can be mixed and suspended.

The rotation speed during the centrifugation is not particularly limited, and is preferably 1,000 to 5,000 rpm, more preferably 1,500 to 4,000 rpm, and still more preferably 1,800 to 3,000 rpm. The time during the centrifugation is not particularly limited, and is preferably 1 to 10 minutes and more preferably 2 to 8 minutes.

It is preferable that the solid particles after the washing are further dried. The drying can be performed, for example, by holding the solid particles at 120°C for 24 hours.

### <Regenerated positive electrode active material>

The regenerated positive electrode active material obtained by the production method according to the embodiment of the present invention is a regenerated positive electrode active material obtained by replenishing lithium in a lithium-deficient positive electrode active material (a).

The crystallinity of the regenerated positive electrode active material can be determined by X-ray diffraction (XRD) using the half-width (full width at half maximum) of the LiFePO₄ peak at 2θ = 17.1 degrees as an index.

The half-width of the regenerated positive electrode active material is preferably 0.001 degrees or more and 0.099 degrees or less, more preferably 0.002 degrees or more and 0.095 degrees or less, still more preferably 0.003 degrees or more and 0.090 degrees or less, even still more preferably 0.004 degrees or more and 0.080 degrees or less, even further still more preferably 0.004 degrees or more and 0.070 degrees or less, even further still more preferably 0.004 degrees or more and 0.060 degrees or less, and even further still more preferably 0.005 degrees or more and 0.050 degrees or less. By setting the half-width within the above-described range, the amount of lithium ions that can be inserted and extracted per unit weight of the regenerated positive electrode active material can be increased.

The half-width can be determined by the method described in Examples.

The regenerated positive electrode active material contains a lithium-containing transition metal phosphate compound, and it is preferable that the half-width of the peak of the X-ray diffraction at 2θ = 17.1 degrees is 0.001 degrees or more and 0.099 degrees or less. In the regenerated positive electrode active material, it is more preferable that the half-width satisfies the above-described preferred range.

The relithiation rate of the regenerated positive electrode active material is preferably 0.5 or more, more preferably 0.6 or more, still more preferably 0.7 or more, even still more preferably 0.8 or more, and even further still more preferably 0.9 or more.

The relithiation rate can be determined by the method described in Examples.

The regenerated positive electrode active material may be a single regenerated positive electrode active material, or may contain a trace amount of a binder and/or a conductive auxiliary agent that has not been removed by the regeneration treatment in addition to the regenerated positive electrode active material. The regenerated positive electrode active material usually contains a trace amount of a binder and/or a conductive auxiliary agent, and in this case, the entire material containing a trace amount of a binder and/or a conductive auxiliary agent is the "regenerated positive electrode active material" obtained by the production method according to the embodiment of the present invention. In a case where a positive electrode active material having no lithium deficiency contains a trace amount of a binder, a conductive auxiliary agent, or the like, it can be determined that the positive electrode active material is a regenerated product (that is, a regenerated positive electrode active material).

A content of the binder in the regenerated positive electrode active material is preferably 0.5% by mass or less. The content of the binder can be determined by thermogravimetry-differential thermal analysis (TG-DTA). An example is shown below.

The dried product of the regenerated positive electrode active material (a product obtained by removing moisture by allowing the product to stand at 120°C for 12 hours) is heated from 25°C at a rate of 5°C/min in a nitrogen atmosphere, and after reaching 600°C, a mass reduction amount after allowing the product to stand at 600°C for 1 hour is measured. More specifically, the measurement is performed as follows.

5 mg of a dried product sample of the regenerated positive electrode active material is placed in a sample pan for a thermogravimetry-differential thermal simultaneous analysis device (manufactured by Shimadzu Corporation, TGA-50H (trade name)), set in the device, and subjected to mass measurement under the following conditions.
· Gas flow rate: 50 ml/min of nitrogen
· Measurement conditions: after being allowed to stand at 25°C for 2 hours, the temperature is raised to 600°C at a temperature rising rate of 5 °C/min in a nitrogen atmosphere, and then allowed to stand at 600°C for 1 hour

The mass reduction amount (% by mass) calculated by the following equation can be defined as the content (% by mass) of the binder in the regenerated positive electrode active material. 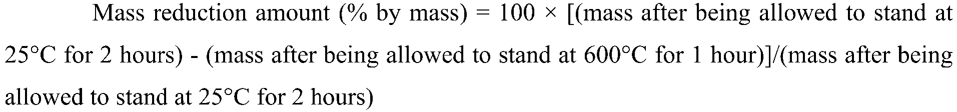 Mass reduction amount (% by mass) = 100 × [(mass after being allowed to stand at 25°C for 2 hours) - (mass after being allowed to stand at 600°C for 1 hour)]/(mass after being allowed to stand at 25°C for 2 hours)

The content of the conductive auxiliary agent in the regenerated positive electrode active material is preferably 0.5% by mass or less. The content of the conductive auxiliary agent in the regenerated positive electrode active material can be determined using energy dispersive X-ray spectroscopy (SEM-EDX).

A sample is prepared by applying the regenerated positive electrode active material to a conductive double-sided tape attached to a sample stage, SEM observation of the regenerated positive electrode active material is performed at an acceleration voltage of 1.5 kV using a field emission scanning electron microscope (FE-SEM) (JSM 7100F (trade name), manufactured by JEOL Ltd.), and elemental analysis is performed by automatic detection using an energy-dispersive X-ray spectroscope (EDX) (Noran System 7 (trade name), manufactured by Thermo Fisher Scientific Inc.,). The mass ratio of the amount of carbon to the total amount of elements detected by automatic detection is defined as the C amount (mass%) in the regenerated positive electrode active material. Since the regenerated positive electrode active material is a metal oxide, the C amount can be regarded as the amount of the conductive auxiliary agent.

The particle diameter of the regenerated positive electrode active material is not particularly limited. For example, the particle diameter can be set to 0.1 to 50 µm, preferably 0.5 to 30 µm, more preferably 1 to 20 µm, still more preferably 2 to 10 µm, and even still more preferably 2 to 6 µm.

The particle diameter of the regenerated positive electrode active material is a volume median diameter D50 in water, which is obtained by dispersing the regenerated positive electrode active material in water and measuring the particle diameter with a laser diffraction/scattering-type particle size distribution analyzer (for example, Particle LA-960V2 manufactured by Horiba Ltd.).

### Examples

The present invention will be described in more detail based on Examples, but the present invention is not limited to and interpreted based on these Examples, except as defined in the present invention.

In addition, "room temperature" means 25°C. "Parts" and "%" representing the composition are based on mass unless otherwise specified.

### [Preparation of lithium-deficient positive electrode active material (a)]

A lithium ion secondary battery was prepared, and the obtained lithium ion secondary battery was charged and discharged to deplete lithium from the positive electrode active material, thereby recovering a lithium-deficient positive electrode active material (a). The details thereof will be described.

### <Battery production: Examples 1 to 16 and Comparative Examples 1 and 2>

### 1. Preparation of non-aqueous electrolytic solution 1

A mixed solvent in which ethylene carbonate (EC), dimethyl carbonate (DMC), and ethyl methyl carbonate (EMC) were mixed at a mass ratio of EC:DMC:EMC = 3:4:3 was blended with LiPF₆ as a lithium salt to a concentration of 1 M to prepare a non-aqueous electrolytic solution (non-aqueous electrolytic solution 1).

### 2. Production of positive electrode

A positive electrode slurry P1 was produced by mixing 95.7 parts by mass of lithium iron phosphate (LiFePO₄) (product code: L0386, manufactured by Tokyo Chemical Industry Co., Ltd.) as a positive electrode active material, 4.3 parts by mass of acetylene black (AB) (Li-100 (trade name), specific surface area = 69 m²/g, manufactured by Denka Company Limited) as a conductive auxiliary agent, polyvinylidene fluoride (PVdF) as a binder, and N-methylpyrrolidone (NMP) as a solvent (concentration of components insoluble in the solvent: 75.3% by mass).

The amount of the binder was set to 6 parts by mass with respect to 100 parts by mass of the positive electrode active material.

The above-described positive electrode slurry P1 was applied to one surface of a positive electrode collector (aluminum foil) having a thickness of 12 µm at a thickness of 125 µm, and the dispersion medium was removed at 240°C. Thereafter, the coated positive electrode collector was pressed at a pressure of 3.2 t using a roll press machine to obtain a sheet-like positive electrode including the positive electrode collector and the positive electrode active material layer. The thickness of the positive electrode was about 80 µm.

### 3. Production of negative electrode

A negative electrode slurry N1 was obtained by mixing 95.7 parts by mass of artificial graphite (UF-G5 (trade name), manufactured by Showa Denko K.K., average particle diameter (spherical average particle diameter) of 3 µm) as a negative electrode active material, 4.3 parts by mass of acetylene black (AB) (Li-100 (trade name), manufactured by Denka Company Limited) as a conductive auxiliary agent, NMP, a styrene-butadiene copolymer (SBR) as a binder, and carboxymethyl cellulose (CMC) as a thickener (concentration of components insoluble in the solvent: 70.6% by mass).

The amount of the binder was set to 1 part by mass with respect to 100 parts by mass of the negative electrode active material, and the amount of the thickener was set to 1 part by mass with respect to 100 parts by mass of the negative electrode active material.

The negative electrode slurry N1 was applied to one surface of a negative electrode collector (copper foil) having a thickness of 12 µm at a thickness of 120 µm, and the dispersion medium was removed at 240°C. Thereafter, the coated negative electrode collector was pressed at a pressure of 2 t using a roll press machine to obtain a sheet-like negative electrode including the negative electrode collector and the negative electrode active material layer. A thickness of the negative electrode active material layer in the negative electrode was approximately 80 µm.

### 4. Production of battery

The obtained positive electrode and negative electrode were laminated with a separator (thickness: 20 µm) manufactured by W-SCOPE Co., Ltd. interposed therebetween to form a laminate consisting of a positive electrode collector, a positive electrode active material layer, a separator, a negative electrode active material layer, and a negative electrode collector. An aluminum tab was attached to an end part of the positive electrode collector, and a nickel tab was attached to an end part of the negative electrode collector, each by ultrasonic welding. A battery assembly was produced by accommodating the laminate in a laminating container. After the non-aqueous electrolytic solution 1 was injected with an injection port kept open, the injection port was sealed and the case was hermetically sealed, thereby obtaining a lithium ion secondary battery.

### <Battery production: Example 17>

A positive electrode slurry P2 was produced in the same manner as in 2. Production of positive electrode described above, except that lithium manganese phosphate (LiMnPO₄) was used instead of the lithium iron phosphate as the positive electrode active material, and a positive electrode was obtained.

A lithium ion secondary battery was produced in the same manner as in 4. Production of battery, except that the positive electrode was used.

### <Battery production: Examples 18 to 21 and Comparative Example 3>

### 1. Preparation of positive electrode slurry P3

A positive electrode slurry P3 was obtained by mixing 99.9 parts by mass of the lithium iron phosphate, 0.1 parts by mass of Ketjen black (Carbon ECP (trade name), manufactured by Lion Specialty Chemicals Co., Ltd.) as a conductive auxiliary agent, and the non-aqueous electrolytic solution 1 at 1,250 rpm for 90 seconds with a centrifugal planetary mixer (manufactured by THINKY Corporation, AWATORI RENTARO (trade name)). The amount of the non-aqueous electrolytic solution 1 in the positive electrode slurry P3 was 22.9 mL per 100 g of the total amount of the positive electrode active material and the conductive auxiliary agent in the positive electrode slurry P3.

### 2. Preparation of negative electrode slurry N3

A negative electrode slurry N3 was obtained by mixing 98.2 parts by mass of artificial graphite (UF-G30 (trade name), manufactured by Showa Denko K.K.), 1.8 parts by mass of carbon black (LITX300 (trade name), manufactured by Cabot Corporation) as a conductive auxiliary agent, and the non-aqueous electrolytic solution 1 at 1,250 rpm for 90 seconds with a centrifugal planetary mixer (manufactured by THINKY Corporation, AWATORI RENTARO (trade name)). The amount of the non-aqueous electrolytic solution 1 in the negative electrode slurry N3 was 37.7 mL per 100 g of the total amount of the negative electrode active material and the conductive auxiliary agent in the negative electrode slurry N3.

### 3. Production of quasi-solid secondary battery

A quasi-solid secondary battery was produced with reference to JP2016-500465A (Examples 10 and 11). Details are described below.

The positive electrode slurry P3 was applied onto an aluminum foil as a positive electrode collector such that a thickness was 500 µm and an area was 80 cm², thereby forming a positive electrode consisting of a positive electrode collector and a positive electrode active material layer.

Similarly, the negative electrode slurry N3 was applied onto a copper foil as a negative electrode collector such that a thickness was 500 µm and an area was 85 cm², thereby forming a negative electrode consisting of a negative electrode collector and a negative electrode active material layer.

A separator (thickness: 20 µm) manufactured by W-SCOPE CO., LTD. was cut to have an area of 90 cm².

The separator was laminated on the negative electrode such that the negative electrode was located within the size of the separator, and the positive electrode was laminated thereon such that the positive electrode was located within the size of the negative electrode, thereby producing a laminate of a negative electrode collector, a negative electrode active material layer (slurry), a separator, a positive electrode active material layer (slurry) and a positive electrode collector. The production of the laminate was completed in approximately 1 minute in order to avoid the volatilization of the non-aqueous electrolytic solution.

Tabs were attached by ultrasonic welding on the uncoated portion of the positive electrode slurry in the aluminum foil and the uncoated portion of the negative electrode slurry in the copper foil, respectively, of the laminate, and the laminate was wrapped in an aluminum laminate and hermetically sealed with a vacuum sealer to produce a lithium ion secondary battery (quasi-solid secondary battery) for an evaluation test.

### <Charging and discharging of lithium ion secondary battery>

Each of the obtained lithium ion secondary batteries was charged and discharged as follows to form the lithium-deficient positive electrode active material (a) in each positive electrode active material layer.

The obtained lithium ion secondary battery was charged at 0.1 C using a charging and discharging evaluation device (TOSCAT-3000 (trade name), manufactured by Toyo System Corporation) until the voltage reached 3.6 V, and then discharged until the voltage reached 2.0 V. This cycle was set as one cycle of charging and discharging, and the charging and discharging were performed 200 times. Thereafter, the charging and discharging were further repeated under the same conditions such that the lithium deficiency rate (30%) of each positive electrode active material was as shown in Table 1.

### [Recovery of lithium-deficient positive electrode active material (a)]

The lithium-deficient positive electrode active material (a) was recovered from the positive electrode of the lithium ion secondary battery after the charging and discharging as follows.

The lithium ion secondary battery after the charging and discharging was disassembled, and the positive electrode was taken out. The taken-out positive electrode was washed with dimethyl carbonate (DMC) and then dried. The dried positive electrode was immersed in NMP for 30 minutes, and then subjected to an ultrasonic treatment in NMP for 20 minutes to dissolve the binder, and the collector was separated and taken out to obtain a suspension containing the lithium-deficient positive electrode active material (a). The suspension was centrifuged at 3,500 rpm for 5 minutes to recover a precipitate, and the precipitate was dried at 120°C for 12 hours. In this manner, the lithium-deficient positive electrode active material (a) was obtained. In the above-described centrifugation, the conductive auxiliary agent did not precipitate, and the conductive auxiliary agent and the lithium-deficient positive electrode active material (a) could be separated.

### [Determination of lithium deficiency rate of lithium-deficient positive electrode active material (a)]

The lithium deficiency rate of the lithium-deficient positive electrode active material (a) was determined by elemental analysis as follows.

The measurement was performed by an absolute calibration curve method using an inductively coupled plasma optical emission spectroscope (ICP-OES) (Optima 7300DV (trade name), manufactured by PerkinElmer, Inc.).

20 mg of the lithium-deficient positive electrode active material (a) was weighed, 60% nitric acid was added thereto, and the mixture was subjected to microwave digestion. After the digestion, the volume was adjusted to 50 mL with ultrapure water, and the resulting solution was further diluted 100-fold to prepare a measurement sample.

The lithium deficiency rate was calculated from the molar ratio of Fe to Li obtained by the ICP-OES measurement. However, in Example 17, the lithium deficiency rate was calculated from the molar ratio of Mn to Li.

Even in a case where the lithium-deficient positive electrode active material (a) contains a transition metal element other than Fe and Mn, the lithium deficiency rate can be determined in the same manner.

### [Relithiation]

Each of the lithium-deficient positive electrode active materials (a) obtained above was relithiated as follows.

### <Relithiation: hydrothermal reaction>

### 1. Preparation of treatment liquid

The lithium compound (b) and the reducing agent (c) were dissolved in ultrapure water such that the amount of Li in the treatment liquid and the concentration in the treatment liquid were as shown in Table 1, and each treatment liquid used for the relithiation was prepared.

The reducing agent (Fe(II)-EDTA) used in Comparative Example 1 was prepared in the same manner as Fe(II)-EDTA in Example 6 of JP2023-502220A.

### 2. Relithiation

Each of the lithium-deficient positive electrode active materials (a) shown in Table 1 and 40 mL of each of the treatment liquids shown in Table 1 were mixed in a pressure-resistant container (manufactured by San-Ai Kagaku Co., Ltd., HU-100 (trade name)) and hermetically sealed. In this way, the lithium-deficient positive electrode active material (a), the lithium compound (b), and the reducing agent (c) were mixed. The concentration of the lithium-deficient positive electrode active material (a) in the mixture is shown in Table 1. Thereafter, the mixture was held at the temperature and for the time shown in Table 1 to carry out a hydrothermal reaction. The solid particles after the hydrothermal reaction were separated by vacuum filtration to obtain each of the regenerated positive electrode active materials.

### <Water washing>

The regenerated positive electrode active material separated and recovered by the vacuum filtration was washed with pure water, transferred to a centrifuge tube, and suspended in pure water. Next, the suspension was subjected to centrifugation for 5 minutes at a rotation speed of 2,000 rpm using a centrifuge, and the precipitate was recovered and dried at 120°C for 24 hours. In this way, the regenerated positive electrode active material was washed with water.

### <Evaluation of relithiation rate and crystallinity>

For each of the regenerated positive electrode active materials after <Water washing>, the peak area of LiFePO₄ at 2θ = 17.1 degrees and the peak area of FePO₄ at 2θ = 18.0 degrees were obtained by X-ray diffraction (XRD), and the relithiation rate was obtained by applying the values to the following equation.

In each of the regenerated positive electrode active materials obtained above, the peak intensities of the LiFePO₄ peak at 2θ = 17.1 degrees were the same.

Furthermore, as an index of the crystallinity of LiFePO₄, the half-width of the LiFePO₄ peak at 2θ = 17.1 degrees was obtained. For the peak used in obtaining the half-width, X-ray diffraction was performed on the positive electrode active material in which lithium was not deficient under the above-described conditions, and the intensity of the obtained LiFePO₄ peak at 2θ = 17.1 degrees was normalized to 1. The smaller the half-width of this peak, the higher the crystallinity.
$Relithiation rate = {LiFePO}_{4} peak area / \left({LiFePO}_{4} peak area + {FePO}_{4} peak area\right)$

MiniFlex (trademark) 600 (manufactured by Rigaku Corporation) was used as the X-ray diffractometer.

For the regenerated positive electrode active material obtained in Example 17, a peak area of LiMnPO₄ at 2θ = 17.1 degrees and a peak area of MnPO₄ at 2θ = 18.0 degrees were obtained by X-ray diffraction (XRD), and the relithiation rate was obtained by applying the peak areas to the following equation.
$Relithiation rate = {LiMnPO}_{4} peak area / \left({LiMnPO}_{4} peak area + {MnPO}_{4} peak area\right)$

In a case where the lithium-deficient positive electrode active material (a) contains a transition metal element other than Fe and Mn, the relithiation rate can be obtained in the same manner.

**[Table 1]**

| | Li-deficient positive electrode active material (a) | | Li compound (b) | | Reducing agent (c) | | | Hydrothermal treatment condition | | | Evalutation | |
|---|---|---|---|---|---|---|---|---|---|---|---|---|
| | Concentration in mixture | Li deficiency rate | Type | Li amount in treatment liquid | Type | Concentration in treatment liquid | oxidation-reduction potential | Li amount of Li Compound (b)/Amount of reducing agent (c) | Temperature | Time | Relithiation rate | Crystallinity (half-width) |
| | mol/L | % | | mol/L | | mol/L | eV vs Li⁺/Li | | °C | hr | | |
| Example 1 | 0.32 | 30 | LiOH | 0.20 | Citric acid | 0.08 | 2.71 | 2.50 | 30 | 12 | 0.6 | 0.095 |
| Example 2 | 0.32 | 30 | LiOH | 0.20 | Sodium phosphinate | 0.08 | 2.55 | 2.50 | 30 | 12 | 0.9 | 0.090 |
| Example 3 | 0.32 | 30 | LiOH | 0.20 | Ascorbic acid | 0.08 | 2.50 | 2.50 | 30 | 12 | 1.0 | 0.050 |
| Example 4 | 032 | 30 | LiOH | 020 | Sodium ascorbate | 0.08 | 2.48 | 250 | 30 | 12 | 1.0 | 0.050 |
| Example 5 | 0.32 | 30 | LiOH | 0.20 | Sodium hydrogen sulfite | 0.08 | 1.92 | 2.50 | 30 | 12 | 0.6 | 0.080 |
| Example 6 | 0.32 | 30 | Li₂SO₄ | 0.20 | Ascorbic acid | 0.08 | 2.50 | 2.50 | 30 | 12 | 1.0 | 0.050 |
| Example 7 | 0.32 | 30 | LiCI | 0.20 | Ascorbic acid | 0.08 | 2.50 | 2.50 | 30 | 12 | 1.0 | 0.050 |
| Example 8 | 0.32 | 30 | LiOH | 0.20 | Ascorbic acid | 0.08 | 2.50 | 2.50 | 60 | 12 | 1.0 | 0.075 |
| Example 9 | 0.32 | 30 | LiOH | 0.20 | Ascorbic acid | 0.08 | 2.50 | 2.50 | 90 | 12 | 1.0 | 0.080 |
| Example 10 | 0.32 | 30 | LiOH | 0.40 | Ascorbic acid | 0.16 | 2.50 | 2.50 | 90 | 12 | 1.0 | 0.080 |
| Example 11 | 0.32 | 30 | LiOH | 1.00 | Ascorbic acid | 0.40 | 2.50 | 2.50 | 90 | 12 | 1.0 | 0.080 |
| Example 12 | 0.32 | 30 | LiOH | 2.00 | Ascorbic acid | 0.80 | 2.50 | 2.50 | 90 | 12 | 1.0 | 0.080 |
| Example 13 | 0.32 | 30 | LiOH | 0.20 | Sodium ascorbate | 0.08 | 2.48 | 2.50 | 60 | 12 | 1.0 | 0.075 |
| Example 14 | 0.32 | *30* | LiOH | 0.20 | Ascorbic acid | 0.08 | 2.50 | 2.50 | 90 | 6 | 1.0 | 0.075 |
| Example 15 | 0.32 | 30 | LiOH | 0.20 | Ascorbic acid | 0.08 | 2.50 | 2.50 | 90 | 3 | 1.0 | 0.070 |
| Example 16 | 0.32 | 30 | LiOH | 0.20 | Ascorbic acid | 0.08 | 2.50 | 2.50 | 30 | 3 | 1.0 | 0.050 |
| Example 17 | 0.32 | 30 | LiOH | 2.00 | Ascorbic acid | 0.80 | 2.50 | 2.50 | 90 | 12 | 1.0 | 0.080 |
| Comparative Example 1 | 0.32 | 30 | LiOH | 0.20 | Fe(II)-EDTA | 0.08 | 3.16 | 2.50 | 30 | 12 | 0.4 | 0.120 |
| Comparative Example 2 | 0.32 | 30 | LiOH | 0.20 | Hydrogen peroxide | 0.08 | 3.74 | 2.50 | 30 | 12 | 0.3 | 0.120 |
| Example 18 | 0.32 | 30 | LiOH | 0.20 | Ascorbic acid | 0.08 | 2.50 | 2.50 | 90 | 12 | 1.0 | 0.080 |
| Example 19 | 0.32 | 30 | LiOH | 0.40 | Ascorbic acid | 0.16 | 2.50 | 2.50 | 90 | 12 | 1.0 | 0.080 |
| Example 20 | 0.32 | 30 | LiOH | 1.00 | Ascorbic acid | 0.40 | 2.50 | 2.50 | 90 | 12 | 1.0 | 0.080 |
| Example 21 | 0.32 | 30 | LiOH | 2.00 | Ascorbic acid | 0.80 | 2.50 | 2.50 | 90 | 12 | 1.0 | 0.080 |
| Comparative Example 3 | 0.32 | 30 | LiOH | 0.20 | Hydrogen peroxide | 0.08 | 3.74 | 2.50 | 30 | 12 | 0.3 | 0.120 |

| | | | | | | | | | | | | |
|---|---|---|---|---|---|---|---|---|---|---|---|---|
| <Note in Table 1> "Li-deficient positive electrode active material (a)": lithium-deficient positive electrode active material (a) "Li deficiency rate": lithium deficiency rate "Li compound (b)": lithium compound (b) | | | | | | | | | | | | |

The oxidation-reduction potential of Fe(II)-EDTA was referred to in Example 6 of JP2023-502220A.

The oxidation-reduction potential of hydrogen peroxide was referred to in Electrochemical Handbook, 6th Edition.

In the production methods of Comparative Example 1 and Comparative Example 2 in which a compound whose oxidation-reduction potential did not satisfy 1.8 to 3.0 eV vs Li⁺/Li was used as the reducing agent (c), the regenerated positive electrode active material having a half-width of 0.120 degrees was obtained in the above-described crystallinity evaluation. In the production methods of these comparative examples, it was not possible to obtain a regenerated positive electrode active material exhibiting sufficient crystallinity. Further, the relithiation rate was also as low as 0.4 or less. It is considered that the crystallinity could not be recovered at a temperature of 30°C during the hydrothermal reaction. Even in the production method of Comparative Example 3 in which the lithium-deficient active material was recovered from the quasi-solid secondary battery and a compound whose oxidation-reduction potential did not satisfy 1.80 to 3.00 eV vs Li⁺/Li was used as the reducing agent (c) to obtain the regenerated positive electrode active material, the same results as in the production methods of Comparative Example 1 and Comparative Example 2 were obtained.

In all of the production methods of Examples 1 to 17 in which a compound whose oxidation-reduction potential satisfied 1.80 to 3.00 eV vs Li⁺/Li was used as the reducing agent (c), the regenerated positive electrode active material having a half-width of 0.090 degrees or less was obtained in the above-described crystallinity evaluation, and a regenerated positive electrode active material exhibiting sufficient crystallinity was obtained. In addition, the relithiation rate of the obtained regenerated positive electrode active material was also as high as 0.6 or more. Even in the production methods of Examples 18 to 21 in which the lithium-deficient active material was recovered from the quasi-solid secondary battery and a compound whose oxidation-reduction potential satisfied 1.80 to 3.00 eV vs Li⁺/Li was used as the reducing agent (c) to obtain the regenerated positive electrode active material, the same results as in the production methods of Examples 1 to 17 were obtained.

According to the production method of the present invention, it can be seen that a regenerated positive electrode active material having excellent crystallinity can be obtained even under mild reaction conditions of 25°C to 160°C. Furthermore, according to the present invention, it can be seen that a regenerated positive electrode active material having excellent crystallinity can be obtained even at a reaction temperature of 30°C.

The present invention has been described using the embodiments; however, unless specified otherwise, any of the details of the above description is not intended to limit the present invention and can be construed in a broad sense within a range not departing from the concept and scope of the present invention disclosed in the accompanying claims.

This application claims priority based on JP2023-219925 filed on December 26, 2023, the contents of which are incorporated herein by reference as part of the present specification.

## Claims

1. A method for producing a regenerated positive electrode active material, the method comprising replenishing lithium in a lithium-deficient positive electrode active material (a) by mixing the lithium-deficient positive electrode active material (a), a lithium compound (b), and a reducing agent (c) to obtain a regenerated positive electrode active material,
wherein an oxidation-reduction potential of the reducing agent (c) is 1.80 to 3.00 eV vs Li⁺/Li.

2. The method for producing a regenerated positive electrode active material according to claim 1, wherein the oxidation-reduction potential of the reducing agent (c) is 2.00 to 2.70 eV vs Li⁺/Li.

3. The method for producing a regenerated positive electrode active material according to claim 1, wherein the reducing agent (c) is an ascorbic acid compound.

4. The method for producing a regenerated positive electrode active material according to claim 1, wherein a mixture of the lithium-deficient positive electrode active material (a), the lithium compound (b), and the reducing agent (c) is held at 25°C to 160°C.

5. The method for producing a regenerated positive electrode active material according to claim 1, wherein a mixture of the lithium-deficient positive electrode active material (a), the lithium compound (b), and the reducing agent (c) is held at 25°C to 120°C.

6. The method for producing a regenerated positive electrode active material according to claim 1, wherein the lithium compound (b) is lithium hydroxide.

7. The method for producing a regenerated positive electrode active material according to claim 1, wherein the lithium-deficient positive electrode active material (a) has an olivine-type structure.

8. The method for producing a regenerated positive electrode active material according to claim 1, wherein the lithium-deficient positive electrode active material (a) is a positive electrode active material represented by Li₁₋ₓM¹PO₄, x represents a lithium deficiency amount and satisfies 0 < x ≤ 1, and M¹ represents at least one element selected from Fe, Mn, and Co.

9. The method for producing a regenerated positive electrode active material according to claim 1, wherein the regenerated positive electrode active material contains a lithium-containing transition metal phosphate compound, and a half-width of a peak at 2θ = 17.1 degrees in X-ray diffraction of the regenerated positive electrode active material is 0.001 degrees or more and 0.099 degrees or less.

10. The method for producing a regenerated positive electrode active material according to claim 9, wherein the half-width of the peak of the regenerated positive electrode active material is 0.005 degrees or more and 0.050 degrees or less.
